# EUROPEAN PATENT SPECIFICATION

(11) **EP 3 238 291 B1**
(45) Date of publication and mention of the grant of the patent: **17.06.2020**
(21) Application number: 15816848.4
(22) Date of filing: 21.12.2015
(51) Int. Cl.: H01M 4/04, H01M 4/136, H01M 4/38, H01M 4/58, H01M 4/62, H01M 10/052, H01M 4/1397

(54) **A CATHODE FOR A LI/S BATTERY**
KATHODE FÜR LI/S-BATTERIE
CATHODE POUR BATTERIE LI/S

(30) Priority: 22.12.2014 GB 201422981; 18.09.2015 GB 201516603
(43) Date of publication of application: 01.11.2017
(73) Proprietor: Oxis Energy Limited, Abingdon, Oxfordshire OX14 3DB (GB)
(72) Inventor: AINSWORTH, David, Abingdon Oxfordshire OX14 3DB (GB); ROWLANDS, Stephen E, Abingdon Oxfordshire OX14 3DB (GB); KREIS, Justyna Katarzyna, Abingdon Oxfordshire OX14 3DB (GB); URRUTIA MUÑOZ, Lisset Amparo, Abingdon Oxfordshire OX14 3DB (GB)
(74) Representative: HGF Limited
(86) International application number: PCT/GB2015/054103
(87) International publication number: WO 2016/102942

(56) References cited:
- WO-A1-2011/147924
- WO-A1-2012/131628
- US-A1- 2011 256 454
- US-A1- 2012 119 158
- US-A1- 2013 183 548

## Description

The present invention relates to a cathode for a lithium-sulphur battery.

### BACKGROUND

A typical lithium-sulphur cell comprises an anode (negative electrode) formed from lithium metal or a lithium metal alloy, and a cathode (positive electrode) formed from elemental sulphur or other electroactive sulphur material. The sulphur or other electroactive sulphur-containing material may be mixed with an electrically conductive material (e.g. carbon black) to improve its electrical conductivity.

In a known method of cathode manufacture, carbon and sulphur are ground to form a physical mixture, which is mixed with solvent and binder to form a slurry. The slurry is applied to a current collector and then dried to remove the solvent. The resulting structure may be calendared to form a composite electrode precursor, which is cut into the desired shape to form a cathode. A separator is placed on the cathode and a lithium anode placed on the separator. Electrolyte is introduced into the cell to wet the cathode and separator.

When a lithium-sulphur cell is discharged, the sulphur in the cathode is reduced. As sulphur is non-conducting, the reduction of sulphur is typically restricted to the surface of sulphur particles that are in contact with the electroconductive material or current collector. Various attempts have been made to improve electrical contact between the non-conducting sulphur particles and the electroconductive material. For example, the amount of electroconductive material (e.g. carbon black) in the electrode can be increased to improve the electrical contact between the electroconductive material and sulphur particles. With this approach, however, the specific energy of the lithium-sulphur cell is decreased, as the overall weight of the cell is increased. Attempts have also been made to grind the sulphur and electroconductive material together to form a fine particulate mixture to enhance the area of contact between the particles of electroconductive material and the sulphur. Excessive grinding, however, can be detrimental to the porosity of the overall electrode structure.

Attempts have also been made to use carbon nanotubes (CNTs) as electroconductive materials. However, it can be difficult to disperse CNTs effectively throughout the electrode structure, for example, because of their size, brittleness and, in some instances, their entangled structure. Without effective dispersion, charge transfer between the positive electrode and the electrolyte is poor.

US 2013/183548 A1 discloses a composition comprising: about 1 to 17.5 wt. % polymeric binder; and about 50 to 99 wt. % carbon-sulfur composite, the carbon-sulfur composite comprising carbon powder characterized by having a surface area of about 50 to 4,000 square meters per gram and a pore volume of about 0.5 to 6 cubic centimeters per gram, wherein the carbon powder comprises carbon having a macromolecular structure ordered in at least two dimensions and characterized by having two-dimensional carbon sheets which are stacked into carbon layers, and about 5 to 95 wt. % sulfur compound in the carbon-sulfur composite.

US 2012/119158 A1 discloses a method for producing a composite sulphur/carbon conductive material obtained solely from an initial sulphur and an initial carbon which includes the following successive steps between 50% and 90% by weight of initial sulphur and between 50% and 10% by weight of initial carbon having a specific surface smaller than or equal to 200 m²/g are placed in a reactor at atmospheric pressure, the sum of the proportions respectively of the initial sulphur and carbon attaining 100%, the reactor is hermetically sealed at atmospheric pressure, and the composite sulphur/carbon conductive material is formed, in powder form, by heat treatment by heating said reactor to a heating temperature comprised between 115° C and 400° C without external regulation of the pressure inside the reactor, and keeping said reactor at said heating temperature during a predetermined time.

WO 2011/147924 A1 discloses a solid composite for use in the cathode of a lithium-sulphur electric current producing cell wherein the solid composite comprises 1 to 75 wt.-% of expanded graphite, 25 to 99 wt.-% of sulphur, 0 to 50 wt.-% of one or more further conductive agents other than expanded graphite, and 0 to 50 wt.-% one or more binder, based on the total amount of the solid composite.

WO 2012/131628 A1 discloses a particulate porous carbon material comprising a carbon phase and at least one pore phase arranged in the carbon phase, the carbon phase of the particles forming, with the pore phase, essentially co- continuous, irregular phase domains, the distance between adjacent domains of the pore phase being essentially not more than 50 nm.

### DESCRIPTION

In describing and claiming the electrode, cell and method of the present invention, the following terminology will be used: the singular forms "a", "an", and "the" include plural forms unless the context clearly dictates otherwise. Thus, for example, reference to "an anode" includes reference to one or more of such elements.

In one aspect, the present invention provides a cathode for a lithium-sulphur battery, according to claims 1, said cathode comprising a particulate mixture deposited on a current collector, said particulate mixture comprising an admixture of (i) composite particles formed from a composite comprising electroactive sulphur material melt-bonded to electroconductive carbon material, and (ii) conductive carbon filler particles (e.g. carbon black), wherein the conductive carbon filler particles form 1 to 15 weight % of the total weight of the composite particles and conductive carbon filler particles, and wherein the electroconductive carbon material is selected from carbon nanotubes and graphene, wherein the conductive carbon filler particles are particles of carbon black, and wherein the composite comprises 12 to 14 weight % electroconductive carbon material based on the total weight of the composite.

The electroconductive carbon material is carbon-based nano-particles selected from carbon nanotubes and graphene. Examples of other such nano-particles include carbon nanofibres, and nanographite. Preferably, the electroconductive carbon material comprises carbon nanotubes. The electroconductive carbon material in the composite may additionally comprise carbon black, which may be melt-bonded or melt-compounded with the electroactive sulphur.

It has been found that, by melt-bonding or melt-compounding electroactive sulphur material to electroconductive carbon material, it is possible to form a composite whereby the electroconductive carbon material is in intimate contact with the electroactive material. For example, by melt-bonding or melt-compounding an electroconductive carbon material (e.g. carbon nanotubes) with the electroactive sulphur material, it is possible to form a composite in which the electroconductive material forms a porous structure around and the electroactive sulphur material. The electroactive sulphur material is in intimate electrical contact with the structure. However, it has been found that, in order to maintain desirable electrical contact upon cycling of the lithium-sulphur cell, it is necessary to mix particles of a conductive carbon filler (e.g.carbon black) with the composite particles. Without wishing to be bound by any theory, it is believed that the conductive carbon filler particles (e.g. carbon black) maintain electrical contact with any sulphur that becomes detached from the composite upon cycling. By formulating the cathode using a mixture of composite and conductive carbon filler particles, therefore, improvements in cycling and capacity can be obtained.

Carbon black is employed as the conductive carbon filler particles. These particles are mixed with the composite particles as a physical mixture; they are not melt-bonded or melt-compounded to form a composite with the composite particles.

Preferably, the conductive carbon filler particles form 3 to 10 weight % of the total weight of the composite particles and conductive carbon filler particles. For example, the conductive carbon filler particles (e.g. carbon black) form 4 to 8 weight % of the composite particles and conductive carbon filler particles. In one example, the conductive carbon filler particles (e.g. carbon black) form 5 to 7 weight % of the composite particles and conductive carbon filler particles.

It has also been found that, in order to optimise the electrochemical properties of the cathode, the content of electroconductive carbon material (e.g. carbon nanotubes) in the cathode should be maintained within 10 to 15 weight % electroconductive carbon material based on the total weight of the composite. Accordingly, also described herein is a cathode for a lithium-sulphur battery, said cathode comprising a particulate mixture deposited on a current collector, said particulate mixture comprising an admixture of (i) composite particles formed from a composite comprising electroactive sulphur material melt-bonded to electroconductive carbon material, and (ii) conductive carbon filler particles, wherein composite particles comprise 10 to 15 weight % of electroconductive carbon material based on the total weight of the composite.

According to the invention, the composite comprises 12 to 14 weight % of electroconductive carbon material (e.g. carbon nanotubes) based on the total weight of the composite.

The present invention also provides a process for forming a cathode as described herein, which process comprises:
a. forming composite particles formed from a composite comprising electroactive sulphur material melt-bonded to electroconductive carbon material,
b. milling said composite particles with conductive carbon filler particles to form a particulate mixture, and
c. depositing said particulate mixture onto a current collector.

The particulate mixture may be milled to a particle size of 30-50µm e.g. prior to being deposited on the current collector.

The particulate mixture may be applied to the current collector in the form of a slurry in a solvent (e.g. water or an organic solvent). The solvent may then be removed and the resulting structure calendared to form a composite structure, which may be cut into the desired shape to form a cathode.

As mentioned above, the cathode of the present invention comprises a composite comprising an electro-active sulphur material. The electroactive sulphur material may form 70 to 90 weight % of electroactive sulphur material based on the total weight of the composite. For example, the electroactive sulphur material may form 80 to 85 weight % of the total weight of the composite. The electroactive sulphur material may comprise elemental sulphur, sulphur-based organic compounds, sulphur-based inorganic compounds and sulphur-containing polymers. Other examples include alkali metal anionic polysulphides, preferably the lithium polysulphides represented by the formula Li₂Sₙ (with n ≥1). In a preferred embodiment, elemental sulphur is used.

The electroactive sulphur material may form 50 to 80 weight % of the total weight of the cathode, for example, 60 to 70 weight % of the total weight of the cathode.

The cathode may comprise 70 - 95 weight % composite particles, for example, 75 to 90 weight % of composite particles.

The cathode may additionally include a binder for binding the composite particles and carbon black together to form the cathodic composition that is deposited on the current collector. The cathode may comprise 2 to 10 weight % binder based on the total weight of the binder, composite particles and conductive carbon filler particles.

The binder may be selected from halogenated polymers and more preferably still from fluorinated polymers. Mention may be made, by way of examples, of poly(vinylidene fluoride) (PVDF), preferably in the α form, poly(trifluoroethylene) (PVF3), polytetrafluoroethylene (PTFE), copolymers of vinylidene fluoride with either hexafluoropropylene (HFP) or trifluoroethylene (VF3) or tetrafluoroethylene (TFE) or chlorotrifluoroethylene (CTFE), fluoroethylene/propylene (FEP) copolymers, copolymers of ethylene with either fluoroethylene/propylene (FEP) or tetrafluoroethylene (TFE) or chlorotrifluoroethylene (CTFE), perfluoropropyl vinyl ether (PPVE), perfluoroethyl vinyl ether (PEVE) and copolymers of ethylene with perfluoromethyl vinyl ether (PMVE), gelatine, rubber (e.g. styrene butadiene rubber) or their blends.

Mention may also be made of polyethers, such as poly(ethylene oxide)s, polyethylene glycols, polypropylene glycols, polytetramethylene glycols (PTMGs), polytetramethylene ether glycols (PTMEGs), and the like.

Preferably, the binder is PVDF or a poly(ethylene oxide).

Other examples include polyacrylonitrile, polyurethane, PVDF-acrylic copolymer; polyacrylic acid and polyvinyl alcohol.

In a preferred embodiment, the binder is gelatine, a cellulose (e.g. carboxymethyl cellulose) or a rubber, for example, styrene butadiene rubber. In a more preferred embodiment, the binder comprises PEO and at least one of gelatine, a cellulose (e.g. carboxymethyl cellulose) and a rubber (e.g. styrene butadiene rubber). In one embodiment, the cathode comprises 1 to 5 weight % PEO and 1 to 5 weight % of a binder selected from gelatine , a cellulose (e.g. carboxymethyl cellulose) or/and a rubber (e.g. styrene butadiene rubber). Such binders may improve the cycle life of the cell. The use of such binders may also allow the overall amount of binder to be reduced e.g. to levels of 10 weight % of the total weight of the cathode or less.

The cathode described herein may be used in a lithium-sulphur cell. Accordingly, a further aspect of the present invention provides a lithium-sulphur cell comprising: an anode comprising lithium metal or lithium metal alloy; a cathode as described herein; and an electrolyte comprising at least one lithium salt and at least one organic solvent. Optionally, a separator may be positioned between the cathode and the anode. For example, when assembling the cell, a separator may be placed on the cathode and a lithium anode placed on the separator. Electrolyte may then be introduced into the assembled cell to wet the cathode and separator. Alternatively, the electrolyte may be applied to the separator, for example, by coating or spraying before the lithium anode is placed on the separator.

The anode may be formed of lithium metal or a lithium metal alloy. Preferably, the anode is a metal foil electrode, such as a lithium foil electrode. The lithium foil may be formed of lithium metal or lithium metal alloy.

As discussed above, the cell comprises an electrolyte. The electrolyte is present or disposed between the electrodes, allowing charge to be transferred between the anode and cathode. Preferably, the electrolyte wets the pores of the cathode as well as, for example, the pores of the separator.

Suitable organic solvents for use in the electrolyte are tetrahydrofurane, 2-methyltetrahydrofurane, dimethylcarbonate, diethylcarbonate, ethylmethylcarbonate, methylpropylcarbonate, methylpropylpropionate, ethylpropylpropionate, methyl acetate, dimethoxyethane, 1, 3-dioxolane, diglyme (2-methoxyethyl ether), tetraglyme, ethylene carbonate, propylene carbonate, butyrolactone, dioxolane, hexamethyl phosphoamide, pyridine, dimethyl sulfoxide, tributyl phosphate, trimethyl phosphate, N, N, N, N-tetraethyl sulfamide, and sulfone and their mixtures. Preferably, the organic solvent is a sulfone or a mixture of sulfones. Examples of sulfones are dimethyl sulfone and sulfolane. Sulfolane may be employed as the sole solvent or in combination, for example, with other sulfones. In one embodiment, the electrolyte comprises lithium trifluoromethanesulphonate and sulfolane.

The organic solvent used in the electrolyte should be capable of dissolving the polysulphide species, for example, of the formula Sₙ²⁻, where n = 2 to 12, that are formed when the electroactive sulphur material is reduced during discharge of the cell.

Where a separator is present in the cell of the present invention, the separator may comprise any suitable porous substrate or membrane that allows ions to move between the electrodes of the cell. The separator should be positioned between the electrodes to prevent direct contact between the electrodes. The porosity of the substrate should be at least 30%, preferably at least 50%, for example, above 60%. Suitable separators include a mesh formed of a polymeric material. Suitable polymers include polypropylene, nylon and polyethylene. Non-woven polypropylene is particularly preferred. It is possible for a multi-layered separator to be employed.

The composite particles employed to form the cathode of the present invention will now be described in further detail.

The composite particles may be formed in a compounding device using a method comprising:
the introduction, into a compounding device, of at least one electroactive sulphur material, of electroconductive carbon material and optionally of a rheology modifier;
the melting of the electroactive sulphur-based material;
the kneading of the molten electroactive sulphur-based material and the electroconductive carbon material and optionally the rheology modifier;
the recovery of the mixture obtained in an agglomerated solid physical form;
the grinding of the mixture to form composite particles.

According to a preferred embodiment, elemental sulphur is used as electroactive sulphur-based material, alone or as a mixture with at least one other electroactive sulphur-based material.

As mentioned above, the melt-bonding or melt compounding of electroactive sulphur-material and electroconductive carbon material to form composite particles may make it possible to facilitate better electrical contact between the electroactive sulphur-material and electroconductive carbon material to allow better access of the sulphur to electrochemical reactions. The melt-bonding or compounding results in a morphology that may be suitable for optimizing the functioning of a Li/S battery cathode. The electroconductive carbon material is advantageously well-dispersed or percolated in a sulphur-based matrix. This can provide efficient transfer of electricity from the current collector and presents an active interface for the electrochemical reactions of the lithium-sulphur cell to occur.

As discussed above, the composite particles may be formed in a compounding device. "Compounding device" may include appliances conventionally used in the plastics industry for the melt blending of thermoplastic polymers and additives for the purpose of producing composites.

This type of appliance has never been used to produce an intimate mixture of electroactive sulphur material (e.g. elemental sulphur) and electroactive carbon material (e.g. carbon nanotubes). One of the technical constraints of a compounding device is due to the relatively narrow molten process window. After the melting at approximately 115°C, the liquid sulphur is very unstable in viscosity, in particular from 140°C. The control of the rheology of the filler-comprising liquid sulphur has to be carried out with complete mastery of the process operating conditions and of the additives which reduce the viscosification above 140°C.

In this compounding device, the electroactive sulphur material (e.g. elemental sulphur) and electroactive carbon material (e.g. carbon nanotubes) are mixed using a high-shear device, for example a co-rotating twin-screw extruder or a co-kneader. The molten material generally exits from the appliance in an agglomerated solid physical form, for example in the form of granules, or in the form of rods which, after cooling, are cut up into granules.

Examples of co-kneaders which can be used according to the invention are the Buss® MDK 46 co-kneaders and those of the Buss® MKS or MX series, sold by Buss AG, which all consist of a screw shaft provided with flights which is positioned in a heating barrel optionally consisting of several parts, the internal wall of which is provided with kneading teeth appropriate for interacting with the flights to produce shearing of the kneaded material. The shaft is driven in rotation and provided with an oscillating movement in the axial direction by a motor. These co-kneaders can be equipped with a system for manufacturing granules, for example attached to their outlet orifice, which can consist of an extrusion screw or of a pump.

The co-kneaders which can be used according to the invention preferably have a screw ratio L/D ranging from 7 to 22, for example from 10 to 20, while the corotating extruders advantageously have an L/D ratio ranging from 15 to 56, for example from 20 to 50.

The compounding stage is carried out at a temperature greater than the melting point of the electroactive sulphur-based material. In the case of elemental sulphur, the compounding temperature can range from 120°C to 150°C. In the case of other types of electroactive sulphur-based material, the compounding temperature depends on the material specifically used, the melting point of which is generally mentioned by the supplier of the material. The residence time will also be adjusted to the nature of the electroactive sulphur material.

As mentioned above, elemental sulphur is preferably used as the electroactive sulphur material. The particle size of the elemental sulphur powder can vary. The elemental sulphur can be used as is or the sulphur can be purified beforehand according to different techniques, such as refining, sublimation or precipitation. The elemental sulphur or the electroactive sulphur-based material can also be subjected to a preliminary stage of grinding and/or sieving in order to reduce the size of the particles and to narrow their distribution.

In alternative embodiments, the electroactive sulphur material may be selected from organic polysulphides, organic polythiolates including, for example, functional groups, such as dithioacetal, dithioketal or trithioorthocarbonate, aromatic polysulphides, polyether-polysulphides, salts of polysulphide acids, thiosulphonates [-S(O)₂-S-], thiosulphinates [-S(O)-S-], thiocarboxylates [-C(O)-S-], dithiocarboxylates [-RC(S)-S-], thiophosphates, thiophosphonates, thiocarbonates, organometallic polysulphides or their mixtures. In one example, the electroactive sulphur material is an alkali metal anionic polysulphides, such as lithium polysulphide.

In an alternative embodiment, the electroactive sulphur material may be an aromatic polysulphide.

Aromatic polysulphides correspond to the following general formula (I): 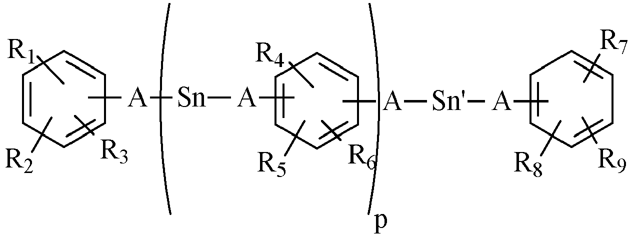 in which:
- R₁ to R₉ represent, in identical or different fashion, a hydrogen atom, an -OH or -O⁻M⁺ radical, a saturated or unsaturated carbon-based chain comprising from 1 to 20 carbon atoms or an -OR₁₀ group with it being possible for R₁₀ to be an alkyl, arylalkyl, acyl, carboxyalkoxy, alkyl ether, silyl or alkylsilyl radical comprising from 1 to 20 carbon atoms,
- M represents an alkali metal or alkaline earth metal,
- n and n' are two integers which are identical or different, each being greater than or equal to 1 and less than or equal to 8,
- p is an integer between 0 and 50,
- and A is a nitrogen atom, a single bond or a saturated or unsaturated carbon-based chain of 1 to 20 carbon atoms.

Preferably, in the formula (I):
- R₁, R₄ and R₇ are O⁻M⁺ radicals,
- R₂, R₅ and R₈ are hydrogen atoms,
- R₃, R₆ and R₉ are saturated or unsaturated carbon-based chains comprising from 1 to 20 carbon atoms, preferably from 3 to 5 carbon atoms,
- the mean value of n and of n' is approximately 2,
- the mean value of p is between 1 and 10, preferably between 3 and 8. (These mean values are calculated by a person skilled in the art from proton NMR data and by assaying the sulphur by weight),
- A is a single bond connecting the sulphur atoms to the aromatic rings.

Such poly(alkylphenol) polysulphides of formula (I) are known and can be prepared, for example, in two stages:
1) reaction of sulphur monochloride or sulphur dichloride with an alkylphenol, at a temperature of between 100 and 200°C, according to the following reaction: 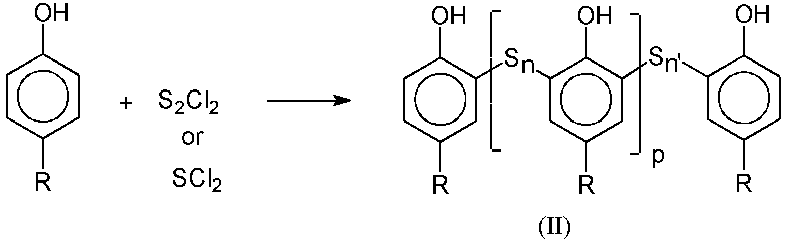
   The compounds of formula (II) are in particular sold by Arkema under the name Vultac®.
2) reaction of the compound (II) with a metal derivative comprising the metal M, such as, for example, an oxide, a hydroxide, an alkoxide or a dialkylamide of this metal, in order to obtain O⁻M⁺ radicals.

According to a more preferred alternative form, R is a tert-butyl or tert-pentyl radical.

It may also be possible to use a mixture of compounds of formula (I) in which two of the R radicals present on each aromatic unit are carbon-based chains comprising at least one tertiary carbon via which R is connected to the aromatic nucleus.

As mentioned above, the electroconductive carbon material may be selected from carbon nanotubes or graphene, or a mixture of these in all proportions. Preferably, the carbon-based conductive fillers are carbon nanotubes, alone or as a mixture with at least one other carbon-based filler also present in the composite e.g. carbon black.

The composite comprises 12 to 14 weight % electroconductive carbon material based on the total weight of the composite.

Where carbon nanotubes are employed, they can be of the single-walled, double-walled or multi-walled type. The double-walled nanotubes can in particular be prepared as described by Flahaut et al. in Chem. Com. (2003), 1442. The multi-walled nanotubes for their part can be prepared as described in the document WO 03/02456.

Where employed, the carbon nanotubes may have a mean diameter ranging from 0.1 to 200 nm, preferably from 0.1 to 100 nm, more preferably from 0.4 to 50 nm and better still from 1 to 30 nm, indeed even from 10 to 15 nm, and advantageously a length of more than 0.1 µm and advantageously from 0.1 to 20 µm, preferably from 0.1 to 10 µm, for example of approximately 6 µm. Their length/diameter ratio is advantageously greater than 10 and generally greater than 100. These nanotubes thus comprise in particular "VGCF" nanotubes (carbon fibres obtained by chemical vapour deposition or Vapor Grown Carbon Fibers). Their specific surface is, for example, between 100 and 300 m²/g, advantageously between 200 and 300 m²/g, and their apparent density can in particular be between 0.01 and 0.5 g/cm³ and more preferably between 0.07 and 0.2 g/cm³. The multi-walled carbon nanotubes can, for example, comprise from 5 to 15 sheets and more preferably from 7 to 10 sheets.

These nanotubes may or may not be treated.

An example of crude carbon nanotubes is in particular the tradename Graphistrength® C100 from Arkema.

These nanotubes can be purified and/or treated (for example oxidized) and/or ground and/or functionalized.

The grinding of the nanotubes can in particular be carried out under cold conditions or under hot conditions and can be carried out according to the known techniques employed in devices such as ball, hammer, edge runner, knife or gas jet mills or any other grinding system capable of reducing the size of the entangled network of nanotubes. It is preferable for this grinding stage to be carried out according to a gas jet grinding technique and in particular in an air jet mill.

The crude or ground nanotubes can be purified by washing using a sulphuric acid solution, so as to free them from possible residual inorganic and metallic impurities, such as, for example, iron, originating from their preparation process. The weight ratio of the nanotubes to the sulphuric acid can in particular be between 1:2 and 1:3. The purification operation can furthermore be carried out at a temperature ranging from 90°C to 120°C, for example for a period of time of 5 to 10 hours. This operation can advantageously be followed by stages in which the purified nanotubes are rinsed with water and dried. In an alternative form, the nanotubes can be purified by high-temperature heat treatment, typically at greater than 1000°C.

The oxidation of the nanotubes is advantageously carried out by bringing the latter into contact with a sodium hypochlorite solution including from 0.5% to 15% by weight of NaOCI and preferably from 1% to 10% by weight of NaOCI, for example in a weight ratio of the nanotubes to the sodium hypochlorite ranging from 1:0.1 to 1:1. The oxidation is advantageously carried out at a temperature of less than 60°C and preferably at ambient temperature, for a period of time ranging from a few minutes to 24 hours. This oxidation operation can advantageously be followed by stages in which the oxidized nanotubes are filtered and/or centrifuged, washed and dried.

The functionalization of the nanotubes can be carried out by grafting reactive units, such as vinyl monomers, to the surface of the nanotubes. The constituent material of the nanotubes is used as radical polymerization initiator after having been subjected to a heat treatment at more than 900°C, in an anhydrous medium devoid of oxygen, which is intended to remove the oxygen-comprising groups from its surface. It is thus possible to polymerize methyl methacrylate or hydroxyethyl methacrylate at the surface of carbon nanotubes.

Preferably, crude carbon nanotubes are employed. Such nanotubes are neither oxidized nor purified nor functionalized and have not been subjected to any other chemical and/or heat treatment, and are optionally ground.

Furthermore, it is preferable to use carbon nanotubes obtained from a renewable starting material, in particular of plant origin, as described in Application FR 2 914 634.

Where carbon nanofibres are employed, they may be nano-filaments produced by chemical vapor deposition (or CVD) starting from a carbon-based source which is decomposed on a catalyst comprising a transition metal (Fe, Ni, Co, Cu), in the presence of hydrogen, at temperatures of 500°C to 1200°C. Carbon nanofibres differ from carbon nanotubes in their structure (I. Martin-Gullon et al., Carbon, 44 (2006), 1572-1580). This is because the carbon nanotubes consist of one or more graphene sheets wound concentrically around the axis of the fibre to form a cylinder having a diameter of 10 to 100 nm. On the contrary, the carbon nanofibres consist of more or less organized graphite regions (or turbostratic stacks), the planes of which are inclined at variable angles with respect to the axis of the fibre. These stacks can take the form of platelets, fishbones or dishes stacked in order to form structures having a diameter generally ranging from 100 nm to 500 nm, indeed even more.

Furthermore, it is preferable to use carbon nanofibres having a diameter of 100 to 200 nm, for example of approximately 150 nm (VGCF® from Showa Denko), and advantageously a length of 100 to 200 µm.

The term "graphene" denotes a flat, isolated and separate graphite sheet but also, by extension, an assemblage comprising between one and a few tens of sheets and exhibiting a flat or more or less wavy structure. This definition thus encompasses FLGs (Few Layer Graphene), NGPs (Nanosized Graphene Plates), CNSs (Carbon NanoSheets) or GNRs (Graphene NanoRibbons). On the other hand, it excludes carbon nanotubes and nanofibres, which respectively consist of the winding of one or more graphene sheets coaxially and of the turbostratic stacking of these sheets. Furthermore, it is preferable for the graphene used according to the invention not to be subjected to an additional stage of chemical oxidation or of functionalization.

The process according to the invention makes it possible to efficiently and homogeneously disperse a large amount of electroactive carbon material in the electroactive sulphur material to form a composite. As discussed above, this composite is subsequently mixed with carbon black or other conductive carbon filler particles. Carbon black is a colloidal carbon-based material manufactured industrially by incomplete combustion of heavy petroleum products, which is provided in the form of carbon spheres and of aggregates of these spheres, the dimensions of which are generally between 5 and 20 µm (10 µm is preferred) As mentioned above, examples of suitable conductive carbon filler particles other than carbon black include carbon nanotubes, carbon fibres and graphene. Suitable examples of carbon nanotubes, carbon fibres and graphene have been described in relation to the electroconductive carbon material present in the composite. However, for avoidance of doubt, the same examples can also be used as the conductive carbon filler particles, which are mixed with the composite to form the cathode described herein.

As explained above, it is possible to add, during the compounding stage, an additive which modifies the rheology of the sulphur in the molten state, in order to reduce the self-heating of the mixture in the compounding device. Such additives having a fluidizing effect on the liquid sulphur are described in Application WO 2013/178930. Mention may be made, as examples, of dimethyl sulphide, diethyl sulphide, dipropyl sulphide, dibutyl sulphide, dimethyl disulphide, diethyl disulphide, dipropyl disulphide, dibutyl disulphide, their trisulphide homologues, their tetrasulphide homologues, their pentasulphide homologues or their hexasulphide homologues, alone or as mixtures of two or more of them in all proportions.

The amount of rheology-modifying additive is generally between 0.01% and 5% by weight, preferably from 0.1% to 3% by weight, with respect to the total weight of the cathode active material.

According to a specific embodiment of the invention, other additives can be introduced into the compounding device. Mention may be made, for example, of the additives which make it possible to improve the ion conductivity of the cathode active material. Polymers of poly(ethylene oxide) type, optionally combined with a lithium salt, can advantageously be used.

At the outlet of the compounding device, the masterbatch is in the agglomerated physical form, for example in the form of granules.

In a final stage, the masterbatch is subjected to a stage of grinding according to the techniques well known to a person skilled in the art, so as to obtain a composite masterbatch in the powder form. Use may be made, as appliances, of a hammer mill, a bead mill, an air jet mill or a planetary mixer. On conclusion of this stage, the median diameter D₅₀ desired is generally between 1 and 50 µm, preferably between 10 and 20 µm.

The composite particles produced are mixed with carbon black or other conductive carbon filler particles and, optionally, a binder as described above to produce the cathodes described herein.

### EXPERIMENTAL PART

### Example 1: Preparation of a S/CNT active material

CNTs (Graphistrength® C100 from Arkema) and solid sulphur (50-800 µm) were introduced into the first feed hopper of a Buss® MDK 46 co-kneader (L/D = 11), equipped with a recovery extrusion screw and with a granulation device.

The set temperature values within the co-kneader were as follows: Zone 1: 140°C; Zone 2: 130°C; Screw: 120°C.

At the outlet of the die, the mixture consisting of 87,5% by weight of sulphur and 12,5% by weight of CNTs is in the form of granules obtained by pelletizing, cooled by air.

The granules were subsequently ground in a hammer mill, cooling being provided by nitrogen.

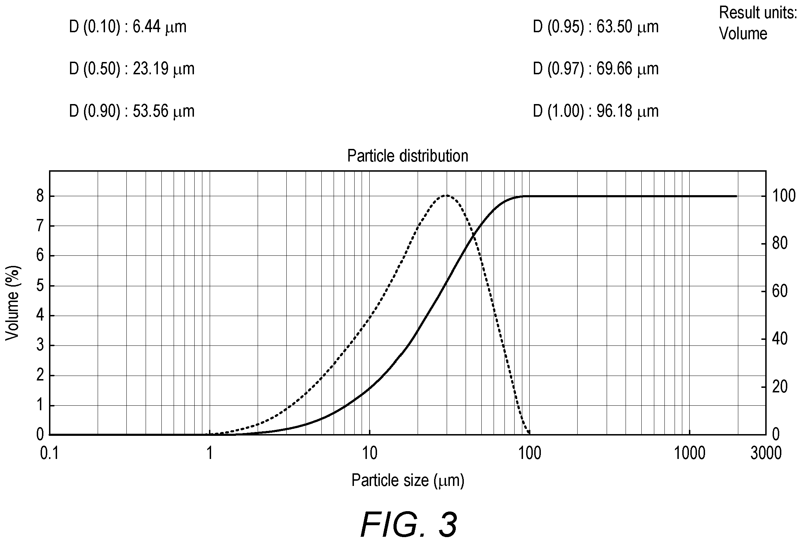

A powder with a D₅₀ of between 20 and 50 µm was obtained, the observation of which using a scanning electron microscope (SEM) showed that the CNTs were well dispersed in the sulphur (Figure 3).

This powder, consisting of 87,5% by weight of sulphur and 12,5% by weight of CNTs, is an active material which can be used in the preparation of a cathode for a Li/S battery.

### Example 2: Preparation of a S/DMDS/CNT active material - not according to the invention

CNTs (Graphistrength® C100 from Arkema) and solid sulphur (50-800 µm) were introduced into the first feed hopper of a Buss® MDK 46 co-kneader (L/D = 11), equipped with a recovery extrusion screw and with a granulation device.

Liquid dimethyl disulphide (DMDS) was injected into the 1^{st} zone of the co-kneader.

The set temperature values within the co-kneader were as follows: Zone 1: 140°C; Zone 2: 130°C; Screw: 120°C.

At the outlet of the die, the mixture, consisting of 83% by weight of sulphur, 2% by weight of DMDS and 15% by weight of CNTs, is in the form of granules obtained by pelletizing, cooled by air.

The dried granules were subsequently ground in a hammer mill, cooling being provided by nitrogen.

A powder consisting of 83% by weight of sulphur, 2% by weight of DMDS and 15% by weight of CNTs, with a D₅₀ of between 30 and 60 µm, was obtained, which can be used as cathode active material for a Li/S battery.

### Example 3: Preparation of a S/poly(tert-butylphenol) disulphide/CNT active material - not according to the invention

CNTs (Graphistrength® C100 from Arkema) and solid sulphur (50-800 µm) were introduced into the first feed hopper of a Buss® MDK 46 co-kneader (L/D = 11), equipped with a recovery extrusion screw and with a granulation device.

Liquid dimethyl disulphide (DMDS) was injected into the 1^{st} zone of the co-kneader.

Poly(tert-butylphenol) disulphide, sold under the name Vultac-TB7® by Arkema, was premixed with a Li salt, sold under the name LOA (tradename or chemical name?) by Arkema, and then introduced into the first hopper using a 3^{rd} metering device.

The set temperature values within the co-kneader were as follows: Zone 1: 140°C; Zone 2: 130°C; Screw: 120°C.

At the outlet of the die, the mixture is in the form of granules obtained by pelletizing, cooled by a water jet.

The granules obtained were dried down to a moisture content < 100 ppm.

The dry granules were subsequently ground in a hammer mill, cooling being provided by nitrogen.

A powder consisting of 77% by weight of sulphur, 2% by weight of DMDS, 15% by weight of CNTs, 5% by weight of Vultac-TB7® and 1% by weight of LOA, exhibiting a D₅₀ of between 30 and 50 µm, was obtained, which can be used as cathode active material for a Li/S battery.

### Example 4: Preparation of a S/POE/Li₂S/CNT active material - not according to the invention

CNTs (Graphistrength® C100 from Arkema) and solid sulphur (50-800 µm) were introduced into the first feed hopper of a Buss® MDK 46 co-kneader (L/D = 11), equipped with a recovery extrusion screw and with a granulation device.

Polyethylene oxide Polyox® WSR N-60K (produced by Dow) was premixed with Li₂S, supplied by Sigma. This mixture is introduced into the 1^{st} hopper via the 3^{rd} metering device.

The set temperature values within the co-kneader were as follows: Zone 1: 140°C; Zone 2: 130°C; Screw: 120°C.

At the outlet of the die, the mixture consisting, by weight, of 70% of sulphur, 15% of CNT, 10% of Polyox® WSR N-60K and 5% of Li₂S is in the form of granules obtained by the graduator of the rod, intersected by the conveyor belt without contact with water.

The dry granules were subsequently ground in a hammer mill, cooling being provided by nitrogen.

A powder consisting, by weight, of 70% of sulphur, 15% of CNTs, 10% of Polyox®WSR N-60K and 5% of Li₂S, exhibiting a D₅₀ of between 10 and 15 µm, was obtained, which can be used as cathode active material for a Li/S battery.

### Example 5

In this Example, the composite of Example 1 was used to form a cathode. By way of comparison, further composites were made using the procedure of Example 1 but containing 10 weight % CNT and 15 weight % CNT. The three composites were milled and mixed with carbon black using a kinematic grinder under liquid nitrogen. The particulate mixture was mixed with binder and an organic solvent to form a slurry. The slurry was then applied to a current collector and the slurry dried to remove the organic solvent to form the cathode. The cathode was then used in a Li-S pouch cell.

Two polymers were used as the binder: poly(ethylene oxide) Mw 4M and polyacrylonitrile copolymer LA-132. Because of the polymers, different electrolytes were tested also; sulfolane based for the PEO and 2MGN based for the LA-132.

Table 1 below summarises the proportions of the composite, carbon black and polymer binder (PB) used in the cathodes. Only the example with 12,5 % CNTs is part of the invention.

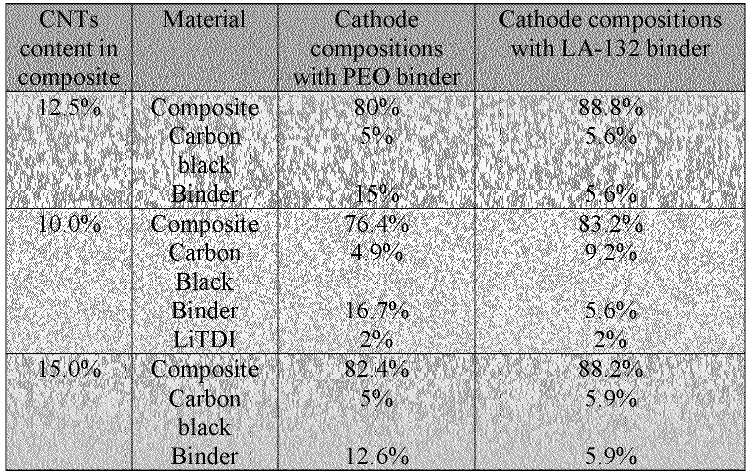

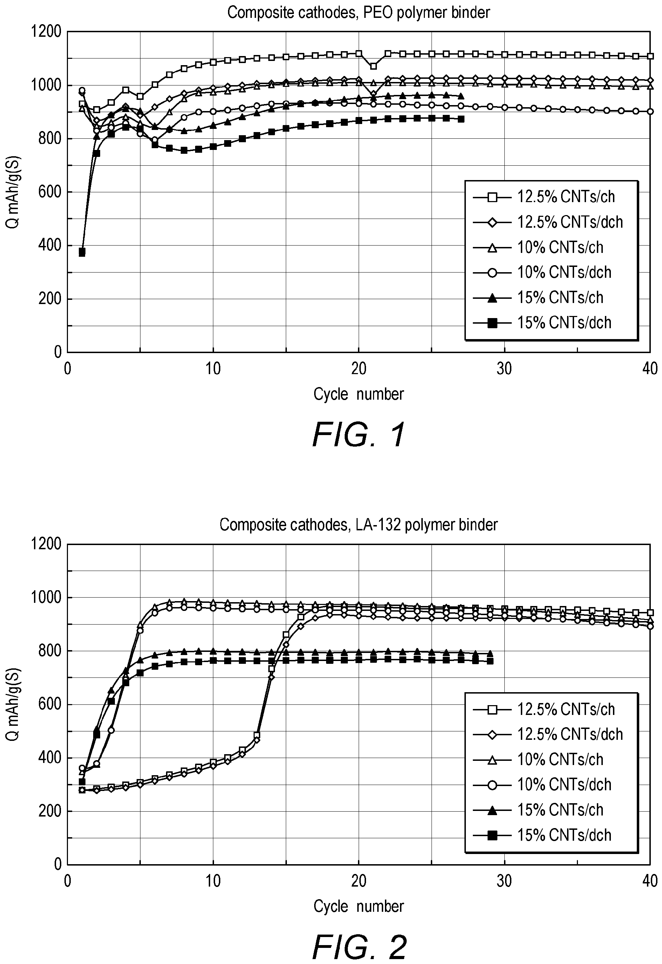

Figure 1 shows the discharge curves for the composites with different concentrations of CNTs. The highest discharge capacity for 25^{th} cycle is for 12.5% CNTs - 1008 mAh/g(S),.

Figure 2 presents discharge capacities for the same composites using LA-132 polymer binder. The results are similar to those using PEO as binder. The highest discharge capacity was for the 12.5 % of CNTs.

### Example 6 - not according to the invention

Example 5 was repeated but without the addition of carbon black. In the absence of carbon black, the cells did not cycle.

### Example 7

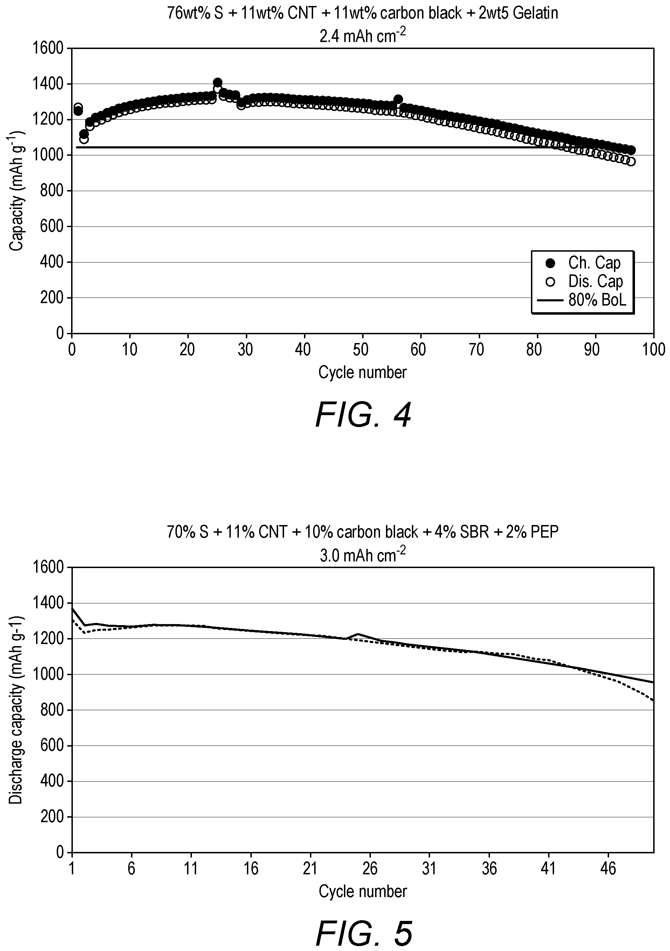

In this example, the composite of Example 1 was used to form a cathode. The composite was milled and mixed with gelatin binder and binder and an organic solvent to form slurry in which the sulfur content was 76wt%, carbon nanotubes (CNT) 11wt%, carbon black 11wt% and gelatin 2wt% (40-50wt% in H₂O). Due to the ionisable groups such as COOH and NH₂ present, the polymer showed good dispersion in the water: ethanol (2:1 ratio) solution used to obtain 10wt% solids content slurry. The slurry was then applied to a current collector and dried to remove the solvent to form the cathode.
Cathodes were coated to obtain 2.4 mAh·cm⁻² surface capacity. The cathodes were used to assemble 10S/9Li cells that were filled with ether based electrolyte. Figure 4 below shows the discharge profile and cycling performance of the cell at 0.2 C and 0.1 C rates (charge - discharge respectively). The electrolyte of the cell was 1M LiOTf + 0.5M LiNO₃ in TEGDME:DME:DOL (50:30:20 v/v). It can be observed that even if the initial discharge capacity is ca. 1260 mAh·g⁻¹, the following discharge drops down to 1089 mAh·g⁻¹, and subsequently, it increases cycle after cycle before getting the desired stability (values even higher than the initial discharge). This may be due to an enhanced wetting once the cycling process has started. As it can be observed, the capacity of the cell reaches 80% of its beginning of life value after 80 cycles, meaning that there is a significant improvement on the cell in comparison with other binder systems. This could be due to an increase in the cathode flexibility given by the gelatin, which buffers the volume expansion during the cell cycling.

To determine the internal characteristics of the cell after 110 cycles, the cell was disassembled when the capacity of the cell reached 65% of its beginning of life value. The cathode was observed to be in good shape and its integrity was not affected (only few amount of material was found in the separator side).

### Example 8

In this example, composite of example 1 was used to form a cathode. The composite was milled and mixed with both PEO and styrene butadiene rubber -SBR (SBR previously dispersed into PEO in a 5:1 ratio) to prepare a slurry in which the sulfur content was 73wt%, CNT 11wt%, carbon black 10wt%, SBR 4wt% and PEO 2wt%. To reach 10% solid content in each suspension, a mixture water/ethanol (2:1 ratio) was used. The slurry was then applied to a current collector and dried up to 40°C to remove the solvent and form the cathode. Cathodes were coated to obtain 3.0 mAh·cm⁻² surface capacity. The adhesion properties shown by the slurry indicates that lower content of the binder mixture can be used in the future.

The cathodes were used to assemble 10S/9Li cells that were filled with ether based electrolyte. Figure 5 below shows the discharge profile and cycling performance of the cell at 0.2 C and 0.1 C rates (charge - discharge respectively). Although, it is observed that the discharge capacity value is lower than previous PEO binder systems, there is a significant improvement in terms of the cell cycle life (50 cycles before the capacity drops to 80% of its beginning of life value as compared to 20 cycles achieved with (20 weight % PEO alone based on the total weight of the cathode). This shows that by the use of PEO combined with SBR binder there is an enhancement in the capacity. Also, compared to previous SBR systems were CMC (carboxy methyl celulose) was used as a co - binder, the PEO replacement seems to provide the expected stability.

## Claims

1. A cathode for a lithium-sulphur battery, said cathode comprising a particulate mixture deposited on a current collector, said particulate mixture comprising an admixture of (i) composite particles formed from a composite comprising electroactive sulphur material melt-bonded to electroconductive carbon material, and (ii) conductive carbon filler particles, wherein conductive carbon filler particles form 1 to 15 weight % of the total weight of the composite particles and conductive carbon filler particles, **characterized in that** the electroconductive carbon material is selected from carbon nanotubes and graphene,
wherein the conductive carbon filler particles are particles of carbon black, and wherein the composite comprises 12 to 14 weight % electroconductive carbon material based on the total weight of the composite.

2. A cathode as claimed in claim 1, wherein the conductive carbon filler particles form 3 to 10 weight % of the total weight of the composite particles and conductive carbon filler particles.

3. A cathode as claimed in any one of the preceding claims, wherein the electroconductive carbon material is carbon nanotubes.

4. A cathode as claimed in any one of the preceding claims, wherein the composite comprises 70 to 90 weight % of electroactive sulphur material based on the total weight of the composite.

5. A cathode as claimed in any one of the preceding claims, wherein the cathode comprises 70 to 95 weight % composite particles.

6. A cathode as claimed in any one of the preceding claims, wherein the cathode further comprises a binder.

7. A cathode as claimed in claim 6, which comprises 2 to 20 weight % binder based on the total weight of the binder, composite particles and particles of carbon black.

8. A cathode as claimed in any one of the preceding claims, wherein the electroactive sulphur material comprises elemental sulphur.

9. A cathode as claimed in any one of the preceding claims, wherein the particulate mixture has a mean particle size of less than 50 microns.

10. A cathode as claimed in any one of the preceding claims, wherein an electrolyte comprising a lithium salt dissolved in a liquid solvent is adsorbed onto the particulate mixture.

11. A cathode as claimed in any one of the preceding claims, wherein the cathode comprises a binder selected from gelatin, styrene butadiene rubber and/or carboxymethyl cellulose, optionally in combination with polyethylene oxide.

12. A process for forming a cathode as claimed in any one of claims 1 to 11 which comprises:
a. forming composite particles formed from a composite comprising electroactive sulphur material melt-bonded to electroconductive carbon material, wherein the electroconductive carbon material is selected from carbon nanotubes and graphene, wherein the composite comprises 12 to 14 weight % electroconductive carbon material based on the total weight of the composite,
b. milling said composite particles with conductive carbon filler particles to form a particulate mixture, wherein the conductive carbon filler particles are particles of carbon black, and
c. depositing said particulate mixture onto a current collector.

13. A process as claimed in claim 12, wherein said particulate mixture is dispersed in a solvent together with a binder to form a slurry, and wherein the slurry is deposited onto the current collector.

14. A process as claimed in claim 12 or 13, wherein the composite particles are formed by melting the electroactive sulphur material and kneading the molten electroactive sulphur material with the electroconductive carbon material in a compounding device to form an agglomerate of the electroactive sulphur material and electroconductive carbon material, whereby the agglomerate is ground to form the composite particles.

15. A lithium-sulphur cell comprising a cathode as claimed in any one of claims 1 to 11, wherein the cell further comprises an anode formed from lithium metal and/or a lithium metal alloy and a separator positioned between the anode and the cathode.

## Patentansprüche

1. Kathode für eine Lithium-Schwefel-Batterie, wobei die Kathode ein Partikelgemisch umfasst, das auf einen Stromabnehmer abgeschieden ist, wobei das Partikelgemisch eine Mischung aus (i) Verbundpartikeln, die aus einem Verbundstoff gebildet sind, der elektroaktives Schwefelmaterial umfasst, das auf elektrisch leitendes Kohlenstoffmaterial schmelzgebunden ist, und (ii) leitende Kohlenstofffüllpartikel umfasst, wobei die leitenden Kohlenstofffüllpartikel 1 bis 15 Gew.-% des Gesamtgewichts der Verbundpartikel und der leitenden Kohlenstofffüllpartikel bilden, **dadurch gekennzeichnet, dass** das elektrisch leitende Kohlenstoffmaterial ausgewählt ist aus Kohlenstoffnanoröhren und Graphen, wobei die leitenden Kohlenstofffüllpartikel Rußpartikel sind, und wobei der Verbundstoff 12 bis 14 Gew.-% elektrisch leitendes Kohlenstoffmaterial auf Grundlage des Gesamtgewichts des Verbundstoffs umfasst.

2. Kathode nach Anspruch 1, wobei die leitenden Kohlenstofffüllpartikel 3 bis 10 Gew.-% des Gesamtgewichts der Verbundpartikel und der leitende Kohlenstofffüllpartikel bilden.

3. Kathode nach einem der vorhergehenden Ansprüche, wobei das elektrisch leitende Kohlenstoffmaterial Kohlenstoffnanoröhren ist.

4. Kathode nach einem der vorhergehenden Ansprüche, wobei der Verbundstoff 70 bis 90 Gew.-% des elektroaktiven Schwefelmaterials auf Grundlage des Gesamtgewichts des Verbundstoffs umfasst.

5. Kathode nach einem der vorhergehenden Ansprüche, wobei die Kathode 70 bis 95 Gew.-% Verbundpartikel umfasst.

6. Kathode nach einem der vorhergehenden Ansprüche, wobei die Kathode ferner ein Bindemittel umfasst.

7. Kathode nach Anspruch 6, die 2 bis 20 Gew.-% Bindemittel auf Grundlage des Gesamtgewichts des Bindemittels, der Verbundpartikel und der Rußpartikel umfasst.

8. Kathode nach einem der vorhergehenden Ansprüche, wobei das elektroaktive Schwefelmaterial elementaren Schwefel umfasst.

9. Kathode nach einem der vorhergehenden Ansprüche, wobei das Partikelgemisch eine mittlere Partikelgröße von weniger als 50 Mikrometern aufweist.

10. Kathode nach einem der vorhergehenden Ansprüche, wobei ein Elektrolyt, das ein in einem flüssigen Lösungsmittel aufgelöstes Lithiumsalz umfasst, an dem Partikelgemisch adsorbiert ist.

11. Kathode nach einem der vorhergehenden Ansprüche, wobei die Kathode ein Bindemittel umfasst, das ausgewählt ist aus Gelatine, Styrol-Butadien-Kautschuk und/oder Carboxymethylcellulose, optional in Kombination mit Polyethylenoxid.

12. Verfahren zum Bilden einer Kathode nach einem der Ansprüche 1 bis 11, das Folgendes umfasst:
a. Bilden von Verbundpartikeln, die aus einem Verbundstoff gebildet sind, der elektroaktives Schwefelmaterial umfasst, das auf elektrisch leitendes Kohlenstoffmaterial schmelzgebunden ist, wobei das elektrisch leitende Kohlenstoffmaterial ausgewählt ist aus Kohlenstoffnanoröhren und Graphen, wobei der Verbundstoff 12 bis 14 Gew.-% elektrisch leitendes Kohlenstoffmaterial auf Grundlage des Gesamtgewichts des Verbundstoffs umfasst,
b. Vermahlen der Verbundpartikel mit leitenden Kohlenstofffüllpartikeln, um ein Partikelgemisch zu bilden, wobei die Kohlenstofffüllpartikel Rußpartikel sind, und
c. Abscheiden des Partikelgemisches auf einen Stromabnehmer.

13. Verfahren nach Anspruch 12, wobei das Partikelgemisch in einem Lösungsmittel zusammen mit einem Bindemittel aufgelöst wird, um einen Schlamm zu bilden, und wobei der Schlamm auf den Stromabnehmer abgeschieden wird.

14. Verfahren nach Anspruch 12 oder 13, wobei die Verbundpartikel durch Schmelzen des elektroaktiven Schwefelmaterials und Verkneten des geschmolzenen elektroaktiven Schwefelmaterials mit dem elektrisch leitenden Kohlenstoffmaterial in einer Compoundiervorrichtung gebildet wird, um ein Agglomerat aus dem elektroaktiven Schwefelmaterial und dem elektrisch leitenden Kohlenstoffmaterial zu bilden, wobei das Agglomerat gemahlen wird, um die Verbundpartikel zu bilden.

15. Lithium-Schwefel-Zelle, umfassend eine Kathode nach einem der Ansprüche 1 bis 11, wobei die Zelle ferner eine aus Lithiummetall und/oder einer Lithiummetalllegierung gebildete Anode und einen zwischen der Anode und der Kathode positionierten Abscheider umfasst.

## Revendications

1. Cathode pour une batterie au lithium-soufre, ladite cathode comprenant un mélange de particules déposé sur un collecteur de courant, ledit mélange de particules comprenant un adjuvant de (i) particules composites formées d'un composite comprenant une matière sulfurée électroactive liée par fusion à une matière carbonée électro-conductrice, et de (ii) particules de charge de carbone conductrices, les particules de charge de carbone conductrices formant de 1 à 15 % en poids du poids total des particules composites et des particules de charge de carbone conductrices,
**caractérisée en ce que** la matière carbonée électro-conductrice est sélectionnée entre des nanotubes de carbone et du graphène,
dans laquelle les particules de charge de carbone conductrices sont des particules de noir de carbone,
et dans laquelle le composite comprend 12 à 14 % en poids de matière carbonée électro-conductrice sur la base du poids total du composite.

2. Cathode selon la revendication 1, dans laquelle les particules de charge de carbone conductrices constituent 3 à 10% en poids du poids total des particules composites et des particules de charge de carbone conductrices.

3. Cathode selon l'une quelconque des revendications précédentes, dans laquelle la matière carbonée électro-conductrice est des nanotubes de carbone.

4. Cathode selon l'une quelconque des revendications précédentes, dans laquelle le composite comprend 70 à 90 % en poids de matière sulfurée électroactive sur la base du poids total du composite.

5. Cathode selon l'une quelconque des revendications précédentes, la cathode comprenant 70 à 95 % en poids de particules composites.

6. Cathode selon l'une quelconque des revendications précédentes, la cathode comprenant en outre un liant.

7. Cathode selon la revendication 6, qui comprend 2 à 20 % en poids de liant sur la base du poids total du liant, des particules composites et des particules de noir de carbone.

8. Cathode selon l'une quelconque des revendications précédentes, dans laquelle la matière sulfurée électroactive comprend du soufre élémentaire.

9. Cathode selon l'une quelconque des revendications précédentes, dans laquelle le mélange de particules a une taille de particule inférieure à 50 microns.

10. Cathode selon l'une quelconque des revendications précédentes, dans laquelle un électrolyte comprenant un sel de lithium dissous dans un solvant liquide est adsorbé sur le mélange de particules.

11. Cathode selon l'une quelconque des revendications précédentes, la cathode comprenant un liant sélectionné entre : gélatine, caoutchouc de styrène butadiène et/ou carboxyméthylcellulose, optionnellement en combinaison avec de l'oxyde de polyéthylène.

12. Processus pour former une cathode selon l'une quelconque des revendications 1 à 11, qui comprend :
a. la formation de particules composites formées à partir d'un composite comprenant une matière sulfurée électroactive liée par fusion à une matière carbonée électro-conductrice, dans lequel la matière carbonée électro-conductrice est sélectionnée entre des nanotubes de carbone et du graphène, le composite comprenant 12 à 14 % en poids de matière carbonée électro-conductrice sur la base du poids total du composite,
b. le broyage desdites particules composites avec des particules de charge de carbone conductrices pour former un mélange de particules, dans lequel les particules de charge de carbone conductrices sont des particules de noir de carbone, et
c. le dépôt dudit mélange de particules sur un collecteur de courant.

13. Processus selon la revendication 12, dans lequel le mélange de particules est dispersé dans un solvant en même temps qu'un liant pour former une bouillie, et dans lequel la bouillie est déposée sur le collecteur de courant.

14. Processus selon la revendication 12 ou 13, dans lequel les particules composites sont formées par fusion de la matière sulfurée électroactive et malaxage de la matière sulfurée électroactive en fusion avec la matière carbonée électro-conductrice dans un dispositif de combinaison pour former un agglomérat de la matière sulfurée électroactive et de la matière carbonée électro-conductrice, l'agglomérat étant broyé pour former les particules composites.

15. Pile au lithium-soufre comprenant une cathode selon l'une quelconque des revendications1 à 11, la pile comprenant en outre une anode formée de métal lithium et/ou d'un alliage de métal lithium et un séparateur positionné entre l'anode et la cathode.
